Europäisches Patentamt

European Patent Office

Office européen des brevets

(11) Veröffentlichungsnummer: **0 286 815 B1**

(12) **EUROPÄISCHE PATENTSCHRIFT**

(45) Veröffentlichungstag der Patentschrift: 29.05.91

(21) Anmeldenummer: 88103037.3

(22) Anmeldetag: 01.03.88

(51) Int. Cl.⁵: **F01D 21/04**

(54) **Berstschutzring für Turbotriebwerksgehäuse.**

(30) Priorität: 15.04.87 DE 3712830
15.04.87 DE 3712829

(43) Veröffentlichungstag der Anmeldung:
19.10.88 Patentblatt 88/42

(45) Bekanntmachung des Hinweises auf die
Patenterteilung:
29.05.91 Patentblatt 91/22

(84) Benannte Vertragsstaaten:
AT BE CH DE FR GB IT LI

(56) Entgegenhaltungen:
EP-A- 0 028 476
EP-A- 0 128 819
GB-A- 2 159 886
US-A- 4 547 122

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Hüther, Werner, Dr.
Nikolaus-Lenau-Strasse 8
W-8047 Karlsfeld(DE)**
Erfinder: **Rossmann, Axel
Bachweg 4
W-8047 Karlsfeld(DE)**

## Beschreibung

Die Erfindung betrifft einen Berstschutzring für Turbotriebwerksgehäuse, bestehend aus einer Keramiklage, die aus einzelnen Keramikkacheln besteht und außen von einem Fasergürtel umgeben ist.

Ein gattungsgemäßer Berstschutzring ist beispielsweise aus der US-A-4 547 122 bekannt geworden, oder der GB-B-1 453 873 welcher das Gehäuse eines Triebwerkes radial außerhalb der Rotoren umschließt. Bei Bruch einer Rotorschaufel trifft das Bruchstück nach Durchschlagen des Triebwerksgehäuses auf die Keramiklage, welche bei genügend kinetischer Energie des Bruchstükkes zertrümmert wird. Hierdurch wird die Energie auf eine Vielzahl von Keramiksplittern verteilt, welche anschließend von dem die Keramiklage umgebenden Fasergürtel absorbiert wird, so daß hierdurch das Bruchstück zurückgehalten wird.

Nachteilig bei dieser Anordnung wirkt sich aus, daß die das gesamte Triebwerk umschließende Keramiklage ebenso wie die für den Fasergürtel verwendeten Glasfasern aufgrund ihrer Dichte ein erhebliches Gewicht haben. Dies ist insbesondere bei den im neuzeitlichen Triebwerksbau erfolgenden Bestrebungen zur Gewichtsreduzierung von Nachteil.

Es ist deshalb Aufgabe der vorliegenden Erfindung, einen Berstschutzring der gattungsgemäßen Art zu schaffen, welcher sich ohne Beeinträchtigung der Schutzwirkung durch ein erheblich geringeres Gewicht auszeichnet.

Gelöst wird die der Erfindung zugrunde liegende Aufgabe dadurch, daß die Keramiklage aus einzelnen Keramikkacheln besteht, welche an wenigen bevorzugten Stellen des Berstschutzringes vorgesehen sind, und der Fasergürtel aus hochelastischem Fasermaterial besteht. Dieses ist vorzugsweise Aramidfasermaterial.

Aramidfasern zeichnen sich gegenüber Glasfaserwerkstoffen durch ein, bezogen auf die Energieaufnahme, erheblich geringeres Gewicht aus. Sie eignen sich daher sehr gut als Faserwerkstoff für einen Berstschutzring. Nachteilig daran ist die erhebliche Aufweitung der Fasern bei Beanspruchung durch ein vom Rotor weggebrochenes Bruchstück. diese Aufweitung ist insbesondere dort von Nachteil, wo aus konstruktiven Gründen wichtige Rohrleitungen oder Hilfsaggregate nahe dem Triebwerksgehäuse angebracht sind. Eine Aufweitung des Berstschutzringes könnte daher trotz Zurückhaltung des Bruchstückes zu Beschädigungen dieser Teile führen. Daher sind erfindungsgemäß an solchen Stellen, an denen eine Aufweitung des Berstschutzringes aus obengenannten Gründen als unzulässig anzusehen ist, Keramikkacheln vorgesehen, welche radial innerhalb des Fasergürtels angeordnet sind.

Durchbohrt an einer von Kermikkacheln bedeckten Stelle ein Rotorbruchstück das Triebwerksgehäuse, so trifft es auf die Kachel. Durch die Aufsplitterung der Kermikkachel wird daher praktisch die gesamte Energie des Rotorbruchstückes aufgenommen, so daß der äußere Fasergürtel nur noch die Aufgabe hat, die Keramiksplitter zusammenzuhalten. Es findet demnach so gut wie keine Aufweitung des Berstschutzringes an diesen Stellen statt. Die Dicke der Kermikkacheln ist daher entsprechend dem verwendeten Keramikwerkstoff und der Maximalenergie der Bruchstücke vorzusehen. Vorzugsweise liegt diese zwischen 5 und 20 mm.

Als Werkstoff für die Keramikkacheln sind in verschiedenen Ausführugnsformen Bornitrit, Borkarbit, Siliziumkarbit, Aluminiumoxid oder Siliziumnitrit vorgesehen.

In denjenigen Bereichen des Triebwerksgehäuses, in denen eine Berstschutzringaufweitung zulässig ist, werden austretende Rotorbruchstücke durch die Verformung des Fasermaterials aufgehalten, wobei durch die erhebliche Aufweitung des Fasergürtels viele Fasern in den Energieumsetzungsprozeß einbezogen werden. Die gesamte Anordnung zeichnet sich durch eine erhebliche Gewichtsersparnis aus, da Aramid-Fasern bei gleicher Energieaufnahme nur etwa die halbe Dichte wie Glasfasern aufweisen und die schweren Keramikkacheln nur an den erforderlichen Stellen des Triebwerksgehäuses vorgesehen sind.

Vorzugsweise ist die Faserschicht mit einer hochelastischen Matrix, z. B. aus Silikongummi versehen, wodurch ein guter Zusammenhalt der Faserlagen erreicht wird, ohne daß eine Reduzierung der Energieaufnahmefähigkeit durch Versteifung des Fasergürtels erfolgt.

Die Erfindung wird nachfolgend anhand der beigefügten Zeichnung näher erläutert.

Dabei zeigt:

Fig. 1    einen schematischen Schnitt durch ein Turbotriebwerk in Höhe einer Rotorbeschaufelung

Fig. 2    einen schematischen Teillängsschnitt durch das Turbotriebwerk.

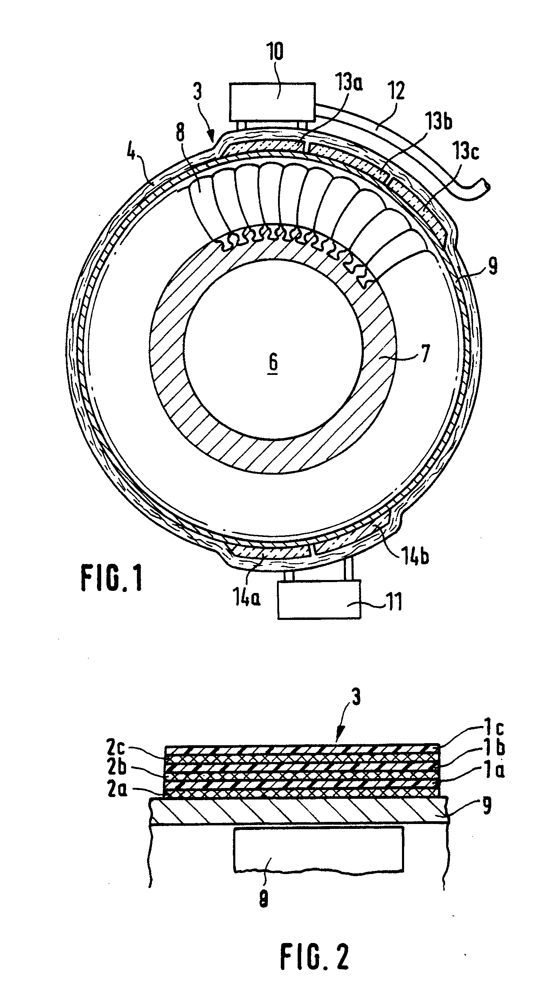

In Fig. 1 ist ein Turbotriebwerk 6 zu sehen, bei dem auf einem Rotor 7 über den Umfang verteilte Schaufeln 8 angebracht sind. Das außerhalb der Schaufeln 8 befindliche Triebwerksgehäuse 9 ist von einem Berstschutzring 3 umgeben. Dieser besteht aus einem mehrlagigen Fasergürtel 4, der mit einer vorzugsweise hochelastischen Matrix versehen ist. An verschiedenen Stellen befinden sich in unmittelbarer Nähe des Triebwerksgehäuses 9 nicht näher dargestellte Hilfsaggregate 10,11 und Rohrleitungen 12. Diese können Verstellvorrichtungen, Getriebe, Ölleitungen oder Ölkühler sein.

Nur radial innerhalb derartiger Hilfsaggregate 10,11 bzw. Rohrleitungen 12 ist das Triebwerksgehäuse 9 von Keramikkacheln 13a, 13b, 13c, 14a, 14b umgeben, die unterhalb des Fasergürtels 4 angeordnet sind.

In dem in Fig. 2 gezeigten Längsschnitt durch ein Triebwerksgehäuse 9 in Höhe einer Rotorschaufel 8, die eine Fan-, Verdichter- oder Turbinenschaufel sein kann, ist ein aus mehreren Faserlagen bestehender Berstschutzring 3 zu sehen, wobei nur einige, stark vergrößerte Faserlagen gezeigt sind. Jede zweite Faserlage 1a, 1b, 1c ist mit einer hochelastischen Matrix durchtränkt. Die nicht durchtränkten Faserlagen 2a, 2b, 2c sind jedoch teilweise von der Matrix durchdrungen, so daß ein fester, formstabiler und trotzdem hochelastischer Verband entsteht.

## Ansprüche

1. Berstschutzring für Turbotriebwerksgehäuse, bestehend aus einer Keramiklage (1), die aus einzelnen Keramikkacheln (13,14) besteht und außen von einem Fasergürtel (4) umgeben ist, dadurch gekennzeichnet, daß die Keramikkacheln (13,14) an wenigen, bevorzugten Stellen des Berstschutzringes (3) vorgesehen sind, und der Fasergürtel (4) aus hochelastischem Fasermaterial besteht.

2. Berstschutzring nach Anspruch 1, dadurch gekennzeichnet, daß der Werkstoff der Keramikkacheln (13,14) Bornitrit, Borkarbid, Siliziumkarbid, Aluminiumoxid oder Siliziumnitrit ist.

3. Berstschutzring nach Anspruch 1 oder 2, dadurch gekennzeichnet, daß die Keramikkacheln (13,14) Kreissegmentform aufweisen.

4. Berstschutzring nach einem der Ansprüche 1 bis 3, dadurch gekennzeichnet, daß das Fasermaterial des Fasergürtels (4) Aramidfasern sind.

5. Berstschutzring nach einem der Ansprüche 1 bis 4, dadurch gekennzeichnet, daß der Fasergürtel (4) mit einer hochelastischen Matrix versehen ist.

6. Berstschutzring nach Anspruch 5, dadurch gekennzeichnet, daß die hochelastische Matrix aus Silikongummi besteht.

7. Berstschutzring nach einem der Ansprüche 1 bis 6, dadurch gekennzeichnet, daß das Fasermaterial mehrlagig aufgewickelt ist und jede zweite Faserlage (11) mit hochelastischer Matrix versehen ist.

8. Berstschutzring nach einem der Ansprüche 1 bis 7 dadurch gekennzeichnet, daß die Fasern mit einer dünnen Schicht zur Einstellung des gewünschten Maßes an Haftung zwischen Matrix und Faser versehen sind.

9. Berstschutzring nach einem oder mehreren der vorhergehenden Ansprüche, dadurch gekennzeichnet, daß das außenliegende Ende des Fasermaterials form- oder materialschlüssig mit der darunter befindlichen Lage verbunden ist.

## Claims

1. Containment ring for a turbo engine housing, comprising a ceramic layer (1) consisting of individual ceramic tiles (13, 14) and surrounded on the outside by a fibre belt (4), characterised in that the ceramic tiles (13, 14) are provided at a few preferred points on the containment ring (3), and the fibre belt (4) consists of highly elastic fibre material.

2. Containment ring according to claim 1, characterised in that the material of the ceramic tiles (13, 14) is boron nitride, boron carbide, silicon carbide, aluminium oxide or silicon nitride.

3. Containment ring according to claim 1 or 2, characterised in that the ceramic tiles (13, 14) have a circular segment shape.

4. Containment ring according to one of claims 1 to 3, characterised in that the fibre material of the fibre belt (4) is aramide fibres.

5. Containment ring according to one of claims 1 to 4, characterised in that the fibre belt (4) is provided with a highly elastic matrix.

6. Containment ring according to claim 5, characterised in that the highly elastic matrix comprises silicone rubber.

7. Containment ring according to one of claims 1 to 6, characterised in that the fibre material is wound on in many layers and every second fibre layer (11) (sic) is provided with a highly elastic matrix.

8. Containment ring according to one of claims 1 to 7, characterised in that the fibres are provided with a thin layer for adjusting the desired amount of adhesion between the matrix and the fibres.

9. Containment ring according to one or more of the preceding claims, characterised in that the outer end of the fibre material is connected in form- or material-fitting manner with the layer below it.

**Revendications**

1. Anneau de protection contre l'éclatement pour un carter de turboréacteur, anneau formé d'une couche de matière céramique (1) composée de différents carreaux de céramique (13, 14) et entourée extérieurement d'une ceinture de fibres (4), anneau caractérisé en ce que les carreaux de céramique (13, 14) sont prévus à quelques endroits préférentiels de l'anneau de protection (3) et la ceinture de fibres (4) est en un matériau de fibres à très grande élasticité.

2. Anneau de protection selon la revendication 1, caractérisé en ce que le matériau des carreaux de céramique (13, 14) est du nitrure de bore, du carbure de bore, du carbure de silicium, de l'oxyde d'aluminium ou du nitrure de silicium.

3. Anneau de protection selon la revendication 1 ou 2, caractérisé en ce que les carreaux en céramique (13, 14) ont une forme de segment de cercle.

4. Anneau de protection selon l'une des revendications 1 à 3, caractérisé en ce que le matériau des fibres de la ceinture de fibres (4) est composé de fibres aramides.

5. Anneau de protection selon l'une des revendications 1 à 4, caractérisé en ce que l'anneau de fibres (4) est muni d'une matrice très élastique.

6. Anneau de protection selon la revendication 5, caractérisé en ce que la matrice très élastique est du caoutchouc au silicone.

7. Anneau de protection selon l'une des revendications 1 à 6, caractérisé en ce que le matériau des fibres est enroulé sur plusieurs nappes et chaque seconde nappe (11) est munie d'une matrice très élastique.

8. Anneau de protection selon l'une des revendications 1 à 7, caractérisé en ce que les fibres sont munies d'une mince couche pour obtenir le degré souhaité d'accrochage entre la matrice et les fibres.

9. Anneau de protection selon l'une ou plusieurs des revendications précédentes, caractérisé en ce que l'extrémité extérieure du matériau composant les fibres est reliée par une liaison par la forme ou par la matière avec la couche qui se trouve en-dessous.

FIG.1

FIG. 2